**Europäisches Patentamt**

**European Patent Office**

**Office européen des brevets**

(19)

(11) Veröffentlichungsnummer: **0 128 357**
**B1**

(12) # EUROPÄISCHE PATENTSCHRIFT

(45) Veröffentlichungstag der Patentschrift:
**13.07.88**

(51) Int. Cl.⁴: **G 08 B 29/00**

(21) Anmeldenummer: **84105205.3**

(22) Anmeldetag: **08.05.84**

(54)

(30) Priorität: **11.05.83 DE 3317319**

(43) Veröffentlichungstag der Anmeldung:
**19.12.84 Patentblatt 84/51**

(45) Bekanntmachung des Hinweises auf die Patenterteilung:
**13.07.88 Patentblatt 88/28**

(84) Benannte Vertragsstaaten:
**AT BE CH DE IT LI NL**

(56) Entgegenhaltungen:
**CH - A - 581 363**
**DE - A - 2 710 046**

(73) Patentinhaber: **CERBERUS AG, Alte Landstrasse 411,
CH-8708 Männedorf (CH)**

(72) Erfinder: **Wirén, Sven, Ing. grad., Sipplinger Strasse 8,
D-8000 München 60 (DE)**

(74) Vertreter: **Tiemann, Ulrich, Dr.-Ing., c/o Cerberus AG
Patentabteilung Alte Landstrasse 411,
CH-8708 Männedorf (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine Anordnung gemäss dem Oberbegriff des Anspruchs 1.

Gefahrenmeldeanlagen und Übertragungsanlagen für Gefahrenmeldungen müssen regelmässig auf ihre Funktionsfähigkeit überprüft werden, um ein zuverlässiges Arbeiten sicherzustellen. Dabei sind aufgrund einschlägiger Bestimmungen regelmässige Inspektionen notwendig, so ist beispielsweise eine jährliche Inspektion der Melder vor Ort erforderlich. Die Primärleitungen derartiger Anlagen sind z.B. vierteljährlich zu überprüfen, hierbei mindestens ein Melder. Dabei ist es jedoch nicht notwendig, dass ein Melder oder ein Hauptmelder, in letzter Zeit mit Übertragungseinrichtung bezeichnet, vor Ort ausgelöst werden muss.

Bisher wurden für die vierteljährliche Inspektion von einer Person vor Ort die Übertragungseinrichtung oder ein Melder einer Primärleitung von Hand oder bei automatischen Meldern mit Prüfgas ausgelöst. Bei Übertragungsanlagen für Gefahrenmeldungen, z.B. die Feuerwehr oder die Polizei, muss eine Person die Übertragungseinrichtung auslösen, während eine zweite Person in der Zentrale diese Inspektionsmeldung entgegennimmt (Zwei-Mann-Inspektion). Beispielsweise bei Einbruch- oder Brandmeldeanlagen kann eine Linie auf Inspektion vorbereitet werden. Die erforderliche Inspektion wird je nach Anlagentyp am inspizierten, vorher ausgelösten Melder kenntlich gemacht oder in der Zentrale beispielsweise auf einem Drucker registriert (Ein-Mann-Inspektion).

Diese Verfahren haben jedoch verschiedene Nachteile. Zum einen ist ein hoher prsoneller Einsatz erforderlich, zum anderen ist die auf Inspektion geschaltete Primärleitung solange nicht alarmbereit, bis die die Inspektion durchführende Person von der Zentrale zum Melder gegangen ist, um ihn vor Ort auszulösen. Im Falle der Ein-Mann-Inspektion vergeht noch weitere Zeit, bis die betreffende Person wieder zur Zentrale zurückgekehrt ist und die auf Inspektion geschaltete Primärleitung wieder zurückgesetzt hat. Erst dann ist diese Primärleitung alarmbereit. Dieses Verfahren stellt deshalb auch noch ein hohes Sicherheitsrisiko dar.

Aus der CH-PS 581 363 ist eine Brandmeldeanlage bekannt, bei der zur Leitungsüberwachung jede Meldeleitung ein Leitungs-Endglied aufweist. Dieses gibt nach einer Umpolung der Leitungsspannung ein Signal ab, welches in der Zentrale mit einer hierfür vorgesehenen Umschalt- und Anzeigeeinrichtung festgestellt wird. Diese Schaltungsanordnung dient der an sich üblichen, regulären Leitungsüberwachung auf Leitungsbruch oder Kurzschluss. Dabei sind für die besonderen Schaltmassnahmen in jedem Melder zumindest eine zusätzliche Sperrdiode erforderlich, um anstelle der bekannten Ruhestromüberwachung eine Leitung ohne zusätzlichen Stromverbrauch zu überwachen. Für eine ferngesteuerte Inspektion von Primärleitungen von Gefahrenmeldeanlagen ist die bekannte Schaltungsanordnung nicht geeignet, weil einerseits jeder Gefahren- bzw.

Hauptmelder zusätzlich mit einer Sperrdiode versehen werden müsste und weil andererseits nicht der Melder ein simuliertes Alarmsignal abgibt, das während des Inspektionsbetriebs in der Zentrale als Inspektionsmeldung interpretiert wird.

Daher ist es Aufgabe der Erfindung, eine Anordnung anzugeben, mit der von der Zentrale aus ferngesteuert die Inspektion von Primärleitungen in Gefahrenmeldeanlagen oder in Übertragungsanlagen für Gefahrenmeldungen durchgeführt werden kann.

Diese Aufgabe wird erfindungsgemäss bei einer Gefahrenmeldeanlage mit den Merkmalen des Anspruchs 1 gelöst.

In einer Gefahrenmeldeanlage ist zusätzlich zu den Meldern der Primärleitung ein Inspektionsmelder vorgesehen, der als letzter Melder an der Primärleitung angeschlossen ist und die Inspektionssteuervorrichtung bildet. Der Inspektionsmelder weist eine Steuerbefehl-Empfangseinrichtung und eine Meldungssimulationseinrichtung auf. Die Anordnung zur Inspektion einer Primärleitung besteht in einer Steuerbefehls-Empfangseinrichtung, die in der Primärleitung zwischen der Zentrale und der Übertragungseinrichtung (früher mit Hauptmelder bezeichnet) einer Übertragungsanlage für Gefahrenmeldungen angeordnet ist, und einer Meldungssimulationseinrichtung, die zwischen der Übertragungseinrichtung und der eigentlichen Gefahrenmeldeanlage in der Primärleitung angeordnet ist, wobei die Meldungssimulationseinrichtung von der Steuerbefehls-Empfangseinrichtung angesteuert wird. Die Meldungssimulationseinrichtung steuert die Übertragungseinrichtung und veranlasst dort die Abgabe einer Alarmmeldung, die in der Zentrale als Inspektionsmeldung bewertet wird. Die erfindungsgemässe Ausgestaltung ist anhand eines Ausführungsbeispiels beschrieben.

Die erfindungsgemässe Anordnung hat unter anderem den Vorteil, dass die zu inspizierende Primärleitung nur für sehr kurze Zeit auf Inspektionsbetrieb geschaltet, so dass sie nach der kurzen Zeit der Inspektionsprüfung wieder für Alarme meldebereit ist. Die Erfindung wird anhand der Ausführungsbeispiele im folgenden näher erläutert. Dabei zeigen

Fig. 1 eine prinzipielle Schaltungsanordnung zur ferngesteuerten Inspektion in einer Übertragungsanlage für Gefahrenmeldungen,

Fig. 2 eine erfindungsgemässe Schaltungsanordnung in einer Gefahrenmeldeanlage mit einem Inspektionsmelder,

Fig. 3 eine erfindungsgemässe Schaltungsanordnung in einer Übertragungsanlage für Gefahrenmeldungen für eine Brandmeldeanlage und

Fig. 4 für eine Einbruchmeldeanlage.

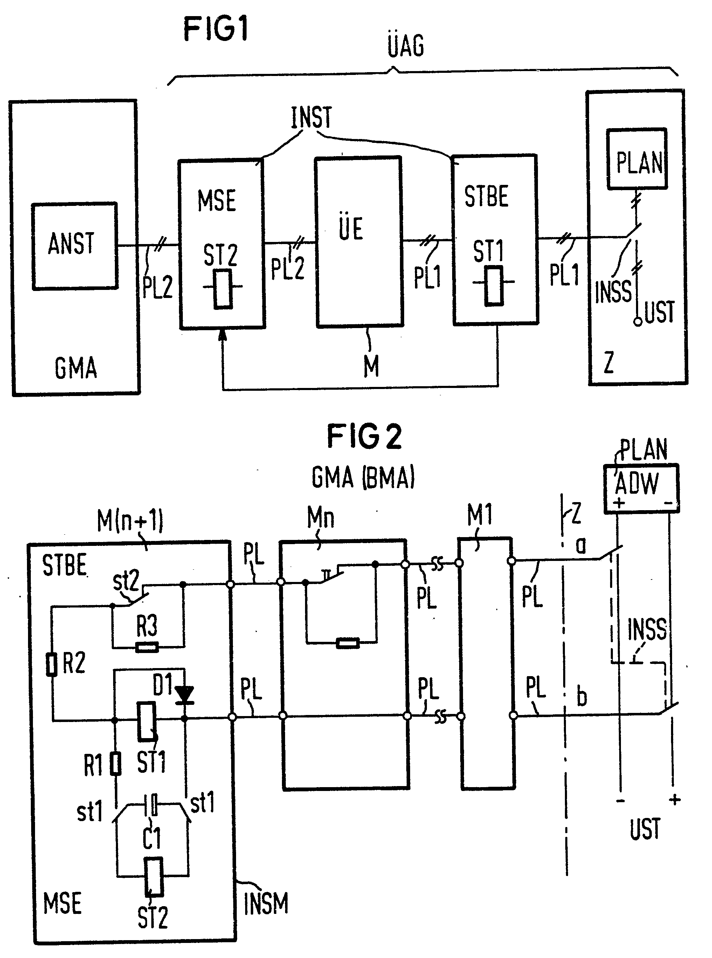

In Fig. 1 ist eine Übertragungsanlage für Gefahrenmeldungen, bestehend aus der Übertragungseinrichtung ÜE, früher mit Hauptmelder bezeichnet, einer ersten Primärleitung (überwachte Meldelinie) PL1 und einer Zentrale Z der beauftragten Stelle dargestellt. An der Übertragungseinrichtung ÜE ist über eine zweite Primärleitung PL2 die Gefahrenmeldeanlage GMA mit einer Ansteuereinrichtung ANST angeschlossen. Erfindungsgemäss ist bei der Übertragungseinrichtung ÜE (Hauptmelder) die Inspektionssteuereinrichtung INST in den Primärleitungen PL1 und PL2 derart angeordnet, dass in der ersten Primärleitung PL1 zwischen der Übertragungseinrichtung ÜE und der Zentrale Z die Steuerbefehl-Empfangseinrichtung STBE und in der zweiten Primärleitung PL2 zwischen der Gefahrenmeldeanlage GMA und der Übertragungseinrichtung ÜE die Meldungssimulationseinrichtung MSE angeordnet ist, wobei die Meldungssimulationseinrichtung MSE von der Steuerbefehls-Empfangseinrichtung STBE angesteuert wird.

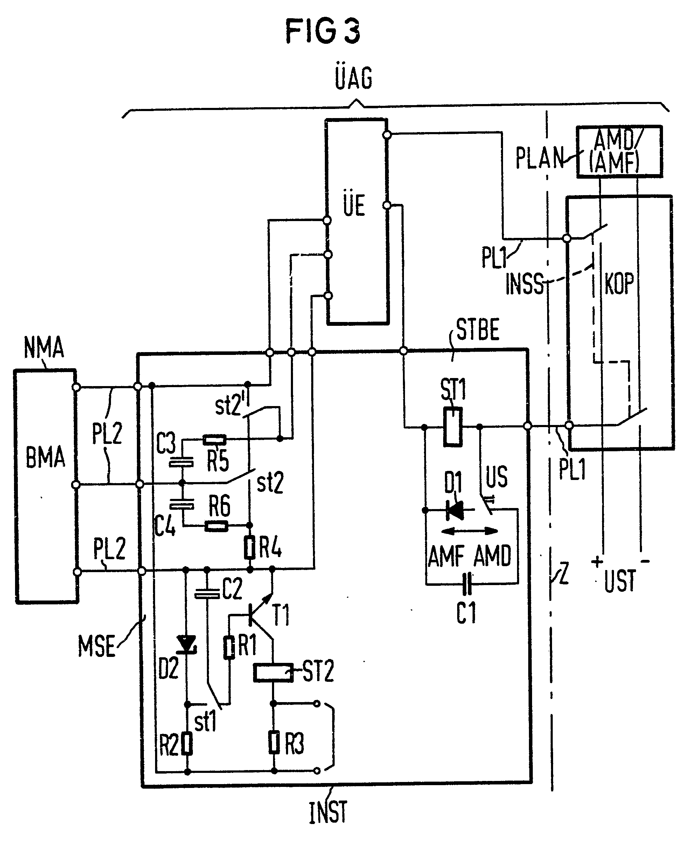

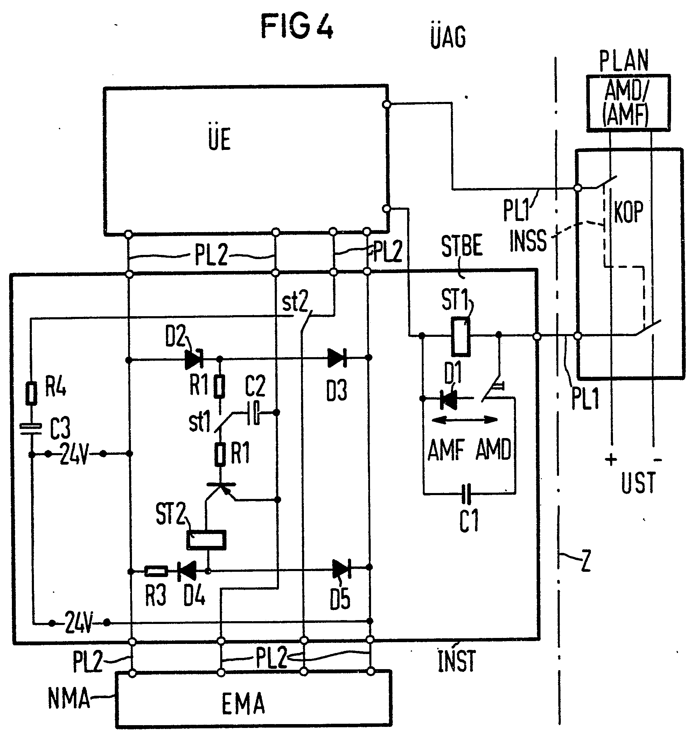

Die Primärleitung PL1 wird von der Zentrale Z aus mit der Anschalteinrichtung für Primärleitungen PLAN überwacht. Wird in der Zentrale Z ein kurzzeitiger Steuerbefehl (UST) für Inspektion über die Primärleitungen PL1 zur Inspektionssteuereinrichtung INST gegeben (INSS), so wird die Primärleitung PL1 von der Anschalteinrichtung für Primärleitungen PLAN getrennt und mit einem Steuerbefehl (UST), beispielsweise durch das Ausschalten einer Steuerspannung UST, beaufschlagt. Dies ist mit dem Inspektionsschalter INSS angedeutet, der von der Anschalteinrichtung PLAN auf die Inspektionssteuerspannung UST umgeschaltet wird, dargestellt. Dadurch wird die Steuerbefehl-Empfangseinrichtung STBE eingeschaltet, die nach Rücknahme des Steuerbefehls (UST) in der Zentrale Z die Meldungssimulationseinrichtung MSE ansteuert, damit diese ihrerseits die Übertragungseinrichtung ÜE ansteuert, um eine Meldung auszulösen. Die Meldungssimulation, d.h. das Ansteuern der Übertragungseinrichtung ÜE zur Alarmgabe, ist dabei auf eine vorgegebene Zeit, beispielsweise 15 Sekunden, begrenzt. Das bedeutet, dass nach dieser Zeit die Übertragungseinrichtung ÜE wieder in die Ausgangslage zurückkehrt. Für die Dauer dieser Meldungssimulation ist dabei die Ansteuereinrichtung ANST der Gefahrenmeldeanlage GMA so geschaltet, dass der Überwachungsstromkreis während dieser Zeitspanne nicht anspricht. Schaltungstechnische Ausführungsformen der Inspektionssteuervorrichtung INST werden noch anhand der Fig. 3 und 4 näher beschrieben.

In Fig. 2 ist ein Schaltbeispiel für die ferngesteuerte Inspektion in einer Gefahrenmeldeanlage GMA, beispielsweise eine Brandmeldeanlage (BMA), dargestellt. An die Zentrale Z sind über die Primärleitung PL mehrere Melder M1 bis Mn angeschlossen. Der Melder Mn ist hier beispielsweise ein Druckknopfmelder. Für das erfindungsgemässe Verfahren ist die Primärleitung PL mit einem Inspektionsmelder INSM, dem Melder M (n + 1), abgeschlossen. In der Zentrale Z ist die Primärleitung PL an die Anschalteinrichtung PLAN, die eine Anschaltung für Druckknopf- und Wärmemelder ADW sein kann, angeschlossen. Für die Inspektion wird ein kurzzeitiger Steuerbefehl (UST) auf die Primärleitung PL gegeben. Dies geschieht beispielsweise dadurch, dass die Primärleitung PL von der Anschalteinrichtung PLAN bzw. ADW kurzzeitig auf die Inspektionssteuerungsspannung UST mittels des Inspektionsschalters INSS umgeschaltet wird. Der Inspektionsmelder INSS weist ein erstes Relais ST1 auf, das über den Widerstand R2 und dem Schaltkontakt st2 des zweiten Relais ST2 an der Primärleitung PL angeschlossen ist. Da im Inspektionsmelder INSM keine eigene Energie zur Verfügung steht, muss der Kondensator C1 mit der am Relais ST1 abfallenden Spannung geladen werden, wenn der kurzzeitige Steuerbefehl (UST) an den Inspektionsmelder INSM gegeben wird. Deshalb wird der Kondensator C1 während des Steuerbefehls (UST) über die Umschaltkontakte st1 des ersten Relais ST1 und über einen Widerstand R1 parallel an das Relais ST1 geschaltet. Nach der Rücknahme des Steuerbefehls (UST) in der Zentrale Z, wirkt die Kondensatorladung direkt auf das zweite Relais ST2, das für eine vorgebbare kleine Zeitspanne beispielsweise 0,2 Sekunden, anspricht. In der Anschalteinrichtung für Druckknopf- und Wärmemelder ADW bzw. PLAN in der Zentrale Z ist eine kürzere Ansprechzeit als 0,2 Sekunden eines Melders ausreichend, um eine gültige Meldung erkennen zu können. Das kurzzeitige Ansprechen des Relais ST2 bewirkt eine Stromschwächung, indem der Relaiskontakt st2 öffnet, so dass daraus in der Zentrale die Inspektionsmeldung erkannt wird.

In Fig. 3 ist ein Schaltbeispiel zur Inspektion in einer Übertragungsanlage für Gefahrenmeldung ÜAG für eine Brandmeldeanlage BMA dargestellt. Ähnlich wie in Fig. 1 ist die Übertragungseinrichtung ÜE (Hauptmelder) mit der Zentrale Z über eine Primärleitung PL1 verbunden. Die Übertragungseinrichtung ÜE ist andererseits über die Primärleitung PL2 mit der Nebenmelderanlage NMA, der Brandmeldeanlage BMA, verbunden. Die Inspektionssteuereinrichtung INST ist, wie prinzipiell in Fig. 1 dargestellt, in der Primärleitung PL1 und PL2 bei der Übertragungseinrichtung ÜE angeordnet. Dabei ist die Steuerbefehls-Empfangseinrichtung STBE von einem ersten Relais ST1 gebildet, das in der Primärleitung PL1 zwischen der Übertragungseinrichtung ÜE und der Zentrale Z angeordnet ist. Dem Relais ST1 kann noch ein Umschalter US zugeordnet werden, mit den dem Relais ST1 eine Diode D1 oder ein Kondensator C1 parallel geschaltet werden kann. In der Zentrale Z ist die Primärleitung PL1 an eine Anschalteinrichtung PLAN geschaltet, die eine Anschaltung für Melder nach dem Diodenprinzip AMD sein kann. Die Anschalteinrichtung für Primärleitungen PLAN in der Zentrale Z kann auch für Übertragungseinrichtungen mit Tonfrequenz (AMF) ausgelegt sein. Deshalb ist in der Steuerbefehl-Empfangseinrichtung STBE am Relais ST1 der Umschalter US angeordnet, mit dem von Anschaltung für Melder mit Tonfrequenz AMF auf Anschaltung für Diodenmelder AMD umgeschaltet werden kann. In der Primärleitung PL2 zwischen der Brandmeldeanlage BMA und der Übertragungseinrichtung ÜE ist die Meldungssimulationseinrichtung MSE angeordnet, die von der Steuerbefehlseinrichtung STBE angesteuert werden kann. Für den Fall der Anschaltung der Melder nach dem Diodenprinzip (AMD) ist die Primärleitung PL1 an der Zentrale Z an die Anschalteinrichtung PLAN über eine Koppelbaugruppe KOP angeschlossen. Die Zentrale Z ist über die Primärleitung PL1 mit der Übertragungseinrichtung ÜE über das Relais ST1 verbunden, das für die Wechselspannung der Anschaltung für Melder nach dem Diodenprinzip AMD durch den Kondensator C1 überbrückt wird und vom Überwachungsstrom wechselnder Polarität seitens der Anschaltung für Melder nach dem Diodenprinzip AMD nicht zum Ansprechen gebracht werden kann.

Eine Inspektion dieser Primärleitung PL1 erfolgt nun folgendermassen: Die Primärleitung PL1 wird aufgrund eines kurzzeitigen Steuerbefehls (UST) auf Inspektion geschaltet. Der Steuerbefehl wird dadurch gegeben, dass die Primärleitung PL1 über die Koppelbaugruppe KOP auf die Steuerspannung UST geschaltet wird, was mit dem Umschalter INSS angedeutet ist. Aufgrund der kurzzeitigen Steuerspannung UST spricht das Relais ST1 an. Über dessen Kontakt st1, der in der Meldungssimulationseinrichtung MSE angeordnet ist, wird in der Meldungssimulationseinrichtung MSE der Kondensator C2 über den Widerstand R2 an eine Spannung gelegt, die durch die Zenerdiode D2 bestimmt wird. Die Zenerdiode D2 ist erforderlich um die Spannung für den Kondensator C2 bei zwei verschiedenen Betriebsspannungen aus der Brandmeldeanlage BMA in gleicher Höhe zu halten. Da der Steuerbefehl (UST) nur kurzzeitig ist, wird er also wieder zurückgenommen. Die Primärleitung PL1 wird über die Koppelbaugruppe KOP wieder an die Anschaltung für Diodenmelder AMD geschaltet. Das Relais ST1 fällt wieder ab, der Kondensator C2 steuert aufgrund seiner Ladung über den Widerstand R1 den Transistor T1 und damit das Relais ST2 für eine vorgebbare Zeitspanne an, weil der Umschaltkontakt st1 des ersten Relais ST1 wieder in seine Ausgangsstellung zurückgekehrt ist. Diese Zeitspanne kann beispielsweise 15 Sekunden betragen. Der Umschaltkontakt st2 des zweiten Relais ST2 schaltet die Überwachung der Übertragungseinrichtung ÜE durch die Brandmeldeanlage BMA für die vorgebbare Zeitspanne (z.B. 15 sec) auf einen Ersatzwiderstand R4, der Kontakt st2' des zweiten Relais ST2 steuert die Übertragungseinrichtung ÜE für diese vorgebbare Zeitspanne. Nach Ablauf der durch C2 und R1 bestimmten Zeit (z.B. 15 sec) fällt das zweite Relais ST2 wieder ab und die Ansteuerung der Übertragungseinrichtung Üe sowie die Umschaltung der Überwachung werden wieder in den Ruhestand geschaltet. Der Kondensator C3 mit dem Widerstand R5 und der Kondensator C4 mit dem Widerstand R6 verhindern dabei, dass die Überwachungsschaltung während der Kontaktumschaltzeit des Kontaktes st2 stromlos wird. In der Zentrale Z läuft eine Alarmmeldung ein, die als Inspektionsmeldung bewertet wird. Nach Ablauf dieses Vorganges ist die Inspektion der Primärleitung PL1 durchgeführt und neu eingehende Alarmmeldungen der Übertragungseinrichtung ÜE werden dann als echte Alarme bewertet. Diese Inspektionssteuereinrichtung INST kann, wie schon dargelegt, auch für Übertragungseinrichtungen mit Tonfrequenz (AMF) verwendet werden, wenn die Übertragungseinrichtung ÜE und die Zentrale Z entsprechend ausgelegt sind. In diesem Fall wird der Umschalter US an die Diode D1 gelegt. Die Diode D1 verhindert, dass im Ruhezustand das Relais ST1 ansprechen kann. Wird in der Zentrale Z auf Inspektion umgeschaltet, so wird die Polarität auf der Primärleitung PL1 geändert, so dass das Relais ST1 für die Inspektion ansprechen kann.

In Fig. 4 ist eine Schaltungsanordnung für die Inspektionssteuereinrichtung INST an der Primärleitung PL1 und PL2 einer Übertragungsanlage für Gefahrenmeldungen ÜAG für Einbruchmeldeanlagen EMA dargestellt. Der Schaltungsaufbau ist ähnlich wie bei Fig. 3. Die Steuerbefehls-Empfangseinrichtung STBE der Inspektionssteuereinrichtung INST ist genauso aufgebaut wie in Fig. 3 und in der Primärleitung PL1 zwischen der Zentrale Z und der Übertragungseinrichtung ÜE angeordnet. Die Meldungssimulationseinrichtung MSE befindet sich in der Primärleitung PL2 zwischen der Übertragungseinrichtung ÜE und der Nebenmelderanlage NMA, beispielsweise einer Einbruchsmeldeanlage EMA. Die Nebenmelderanlage NMA kann auch eine Überfallmeldeanlage ÜMA sein.

Der Ablauf der Inspektion erfolgt ähnlich wie bei Fig. 3 geschildert. Der Unterschied besteht in der Art der Meldungssimulation. Nach Rücknahme des Steuerbefehls (UST) wird die Primärleitung PL1 wieder über die Koppelbaugruppe KOP auf die Anschalteinrichtung für Diodenmelder AMD geschaltet. Das Relais ST1 fällt wieder ab und das Relais ST2 wird für eine vorgebbare Zeitspannung, z.B. 15 Sekunden, angeschaltet. Der Kontakt st2 des Relais ST2 unterbricht die Ruheschleife und bewirkt dadurch Alarm, d.h. ein dafür in der Übertragungseinrichtung ÜE vorgesehenes Relais fällt ab. Dabei wird aber der Kontakt st2 umgeschaltet, so dass der Übertragungseinrichtung ÜE signalisiert werden kann, dass keine Auslösung seitens der Einbruchmeldeanlage EMA erfolgt ist. Nach der vorgegebenen Zeitspanne fällt das Relais ST2 wieder ab, der Ruhezustand wird wieder hergestellt. Der Kondensator C3 und der Widerstand R4 sorgen dafür, dass während der Umschlagzeit des Kontaktes st2 in der Übertragungseinrichtung ÜE eine Anzeigeeinrichtung, die eine Alarmgabe seitens der Nebenmelderanlage NMA signalisieren würde, nicht ansprechen kann. Nach Ablauf der Inspektion wird die betreffende Primärleitung (PL1) wieder auf Normalbetrieb geschaltet. Diese Inspektionssteuereinrichtung (INST) ist ebenso auch für eine Anschaltung für Melder mit Tonfrequenz (AMF) geeignet.

Liste der Bezugszeichen

| | |
|---|---|
| GMA | Gefahrenmeldeanlage |
| ÜAG | Übertragungsanlage für Gefahrenmeldungen |
| M | Melder |
| Z | Zentrale bzw. Zentralstelle |
| PL | Primärleitung (überwachte Meldelinie) |

| UST | Steuerbefehl bzw. Inspektionssteuerspannung |
|---|---|
| INSS | Inspektionsschalter (in der Zentrale) |
| INST | Inspektionssteuervorrichtung |
| INSM | Inspektionsmelder |
| STBE | Steuerbefehl-Empfangseinrichtung |
| MSE | Meldungssimulationseinrichtung |
| ÜE | Übertragungseinrichtung (Hauptmelder) |
| ST1, ST2 | erstes und zweites Relais |
| st1, st2 | Schalt- bzw. Umschaltkontakte des ersten und zweiten Relais |
| PLAN | Anschalteinrichtung für Primärleitung |
| KOP | Koppelbaugruppe |
| AMD | Anschaltung für Diodenmelder |
| ADW | Anschaltung für Druckknopf- und Wärmemelder |
| AMF | Anschaltung für Tonfrequenzmelder |
| BMA | Brandmeldeanlage |
| EMA | Einbruchmeldeanlage |
| NMA | Nebenmeldeanlage |
| ÜMA | Überfallmeldeanlage |

## Patentansprüche

1. Anordnung zur ferngesteuerten Inspektion einer Primärleitung (PL) in Gefahrenmeldeanlagen (GMA) oder in Übertragungsanlagen für Gefahrenmeldungen (ÜAG), wobei eine in der Primärleitung (PL) bei einem Melder angeordnete Steuervorrichtung über die Primärleitung (PL) von einer Zentrale (Z) aus mit einem Steuerbefehl (UST) beaufschlagt wird und die Steuervorrichtung daraufhin ein Signal abgibt, das in der Zentrale (Z) angezeigt wird, dadurch gekennzeichnet, dass die Steuervorrichtung als Inspektions-Steuervorrichtung (INST) mit einer Steuerbefehlsempfangseinrichtung (STBE) und einer Meldungssimulationseinrichtung (MSE) ausgebildet ist, wobei in der Gefahrenmeldeanlage (GMA) die Inspektions-Steuervorrichtung (INST) einen die Primärleitung (PL) abschliessenden Inspektionsmelder (INSM) bildet, wobei in einer Übertragungsanlage für Gefahrenmeldungen (ÜAG) mit einer Übertragungseinrichtung (Hauptmelder; ÜE) zwischen der Gefahrenmeldeanlage (GMA) und der Zentrale (Z) die Steuerbefehlsempfangseinrichtung (STBE) von der Zentrale aus gesehen vor und die Meldungssimulationseinrichtung (MSE), die von der Steuerbefehlsempfangseinrichtung ansteuerbar ist, nach der Übertragungseinrichtung (ÜE) in der Primärleitung (PL1 bzw. PL2) angeordnet sind, und dass mittels der Meldungssimulationseinrichtung (MSE) der Inspektionsmelder (INSM) bzw. die Übertragungseinrichtung (ÜE) innerhalb einer vorgebbaren Zeitspanne eine simulierte Alarmmeldung abgibt, die in der Zentrale während dieser Zeitspanne als Inspektionsmeldung bewertet wird.

2. Anordnung nach Anspruch 1, dadurch gekennzeichnet, dass der Inspektionsmelder (INSM) der Gefahrenmeldeanlage (GMA) im wesentlichen ein erstes Relais (ST1), das über einen Widerstand (R2) und einen Schaltkontakt (st2) eines zweiten Relais (ST2) die Primärleitung (PL) abschliesst, und einen dem zweiten Relais (ST2) parallel geschalteten Ladekondensator (C1) aufweist, der über die Umschaltkontakte (st1) des ersten Relais diesem parallel schaltbar und auf die Spannung des ersten Relais (ST1) aufladbar ist, wobei nach Abfall des ersten Relais (ST1) mit dieser Spannung das zweite Relais (ST2) für eine vorgebbar kurze Zeit ansteuerbar ist.

3. Anordnung nach Anspruch 1, dadurch gekennzeichnet, dass in der Übertragungsanlage für Gefahrenmeldungen (ÜAG) die Steuerbefehlsempfangseinrichtung (STBE) im wesentlichen ein erstes Relais (ST1) aufweist, das in der Primärleitung (PL) angeordnet ist, und dass die Meldungssimulationseinrichtung (MSE) im wesentlichen einen Kondensator (C2), der über einem Umschaltkontakt (st1) des ersten Relais (ST1) während des kurzzeitigen Steuerbefehls (UST) an eine Aufladespannung schaltbar ist, und ein zweites mit der Ladespannung des Kondensators (C2) beaufschlagbares (st1) Relais (ST2) aufweist, wobei durch das zweite Relais (ST2) mit dessen Schaltkontakten (st2, st2') eine Alarmmeldung der Übertragungseinrichtung (ÜE) zur zentralen Stelle (Z) auslösbar ist.

## Claims

1. An arrangement for the remote-controlled inspection of a primary line (PL) in danger alarm systems (GMA) or in transmitting systems for danger alarm systems (ÜAG), wherein a control device arranged in the primary line (PL) of an alarm device is supplied from a central control (Z) with a control command (UST) via the primary line (PL) causing the control device to emit a signal to be displayed in the central control (Z), characterised in that the control device is an inspection control device (INST) comprising a control command receiving device (STBE) and an alarm simulation device (MSE), the inspection control device (INST) in the danger alarm system (GMA) forming an inspection alarm device (INSM) which terminates the primary line (PL), whereby in a transmitting system for danger alarms (ÜAG) comprising a transmitting device (main alarm device; ÜE) between the danger alarm system (GMA) and the central control (Z), viewed from the central control the transmitting device (ÜE) is preceded by the control command receiving device (STBE) and is followed in the primary line (PL1, PL2) by the alarm simulation device (MSE), which can be driven by the control command receiving device, and that by means of the alarm simulation device (MSE), the inspection alarm device (INSM) or the transmitting device (ÜE) emits a simulated alarm within a predeterminable length of time, which is evaluated in the central control, during this interval of time, as an inspection alarm.

2. An arrangement as claimed in Claim 1, characterised in that the inspection alarm device (INSM) of the danger alarm system (GMA) fundamentally comprises a first relay (ST1) which terminates the primary line (PL) via a resistor (R2) and a switching contact (st2) of a second relay (ST2), and a charching capacitor (C1) connected in parallel to the second relay (ST2) and which can be connected in parallel to the first relay via the make-and-break contacts (st1) of the first relay and be charged to the voltage of the first relay (ST1), where, when the first relay (ST1) has dropped, the second relay (ST2) is driven by this voltage for a predeterminable short length of time.

3. An arrangement as claimed in Claim 1, characterised in that in the transmitting system for danger alarms (ÜAG), the control command receiving device (STBE) fundamentally comprises a first relay (ST1) arranged in the primary line (PL), and that the alarm simulation device (MSE) fundamentally comprises a capacitor (C2) connected to a charging voltage via a make-and-break contact (st1) of the first relay (ST1) during the control command (UST) of short duration, and a second relay (ST2) supplied via contact (st1) with the charging voltage of the capacitor (C2), where the make-and-break contacts (st2, st2') of the second relay (ST2) trigger an alarm from the transmitting device (ÜE) to the central control (2).

**Revendications**

1. Montage pour inspection commandée à distance d'une ligne primaire (PL) dans des systèmes avertisseurs de danger (GMA) ou dans des systèmes de transmission pour avertissements de danger (ÜAG), un dispositif de commande monté dans la ligne primaire (PL) dans le cas d'un avertisseur étant sollicité par un ordre de commande (UST) via la ligne primaire (PL) et au départ d'une centrale (Z), tandis que le dispositif de commande émet alors un signal qui est indiqué dans la centrale (Z), caractérisé en ce que le dispositif de commande est réalisé sous forme d'un dispositif de commande d'inspection (INST) avec un dispositif récepteur d'ordre de commande (STBE) et un dispositif simulateur d'avertissement (MSE); dans le système avertisseur de danger (GMA), le dispositif de commande d'inspection (INST) forme un avertisseur d'inspection (INSM) terminant la ligne primaire (PL); dans un système de transmission pour avertissements de danger (ÜAG) avec un dispositif de transmission (avertisseur principal; ÜE), vu au départ de la centrale, le dispositif récepteur d'ordre de commande (STBE) est monté entre le système avertisseur de danger (GMA) et la centrale (Z) devant le dispositif de transmission (ÜE) dans la ligne primaire (PL1 ou PL2), tandis que le dispositif simulateur d'avertissement (MSE) qui peut être commandé par le dispositif récepteur d'ordre de commande, est monté après ce dispositif de transmission (ÜE) dans la ligne primaire (PL1 ou PL2) et, au moyen du dispositif simulateur d'avertissement (MSE), l'avertisseur d'inspection (INSM) ou le dispositif de transmission (ÜE) émet, pendant un laps de tamps pouvant être prédéterminé, un avertissement d'alarme simulé qui est valorisé comme avertissement d'inspection dans la centrale au cours de ce laps de temps.

2. Montage selon la revendication 1, caractérisé en ce que l'avertisseur d'inspection (INSM) du système avertisseur de danger (GMA) comporte essentiellement un premier relais (ST1) qui, via une résistance (R2) et un contact de commutation (st2) d'un deuxième relais (ST2), termine la ligne primaire (PL), ainsi qu'un condensateur de charge (C1) monté en parallèle avec le deuxième relais (ST2), ce condensateur pouvant être mis en parallèle avec le premier relais via le contact de commutation (st1) de ce dernier, tandis qu'il peut être chargé à la tension du premier relais (ST1), le deuxième relais (ST2) pouvant être commandé à cette tension pendant un court laps de temps pouvant être prédéterminé, après la chute du premier relais (ST1).

3. Montage selon la revendication 1, caractérisé en ce que, dans le système de transmission pour avertissements de danger (ÜAG), le dispositif récepteur d'ordre de commande (STBE) comporte essentiellement un premier relais (ST1) qui est monté dans la ligne primaire (PL), et en ce que le dispositif simulateur d'avertissement (MSE) comporte essentiellement un condensateur (C2) qui peut être branché à une tension de charge et via un contact de commutation (st1) du premier relais (ST1) pendant l'ordre de commande de courte durée (UST), ainsi qu'un deuxième relais (ST2) pouvant être sollicité (st1) par la tension de charge du condensateur (C2), un avertissement d'alarme du dispositif de transmission (ÜE) pouvant être déclenché vers l'emplacement central (Z) par le deuxième relais (ST2) au moyen de ses contacts de commutation (st2, st2').

FIG 1

FIG 2

GMA (BMA)

# FIG 3

# FIG 4